# EUROPÄISCHE PATENTSCHRIFT

(11) **EP 4 370 799 B1**
(45) Veröffentlichungstag und Bekanntmachung des Hinweises auf die Patenterteilung: **23.09.2026**
(21) Anmeldenummer: 22743821.5
(22) Anmeldetag: 13.07.2022
(51) Int. Cl.: F04D 1/00, F04D 13/06, F04D 29/58, H02K 9/06, H02K 11/33

(54) **GERÄUSCHOPTIMIERTE KREISELPUMPE**
NOISE-OPTIMIZED CENTRIFUGAL PUMP
POMPE CENTRIFUGE OPTIMISÉE VIS-À-VIS DU BRUIT

(30) Priorität: 15.07.2021 DE 102021118378
(43) Veröffentlichungstag der Anmeldung: 22.05.2024
(73) Patentinhaber: KSB SE & Co. KGaA, 67227 Frankenthal (DE)
(72) Erfinder: JANJIC, Boris, 67227 Frankenthal (DE); SCHUNK, Axel, 67227 Frankenthal (DE); LAUE, Stefan, 67227 Frankenthal (DE); SCHAAB, Jochen, 67227 Frankenthal (DE)
(86) Internationale Anmeldenummer: PCT/EP2022/069590
(87) Internationale Veröffentlichungsnummer: WO 2023/285524

(56) Entgegenhaltungen:
- EP-B1- 0 456 169
- EP-B1- 1 104 079
- CN-A- 105 490 462
- CN-A- 105 545 721
- US-B2- 7 923 875

## Beschreibung

Die Erfindung betrifft eine Kreiselpumpe mit einem Elektromotor, der ein Motorgehäuse und einen Grundkörper aufweist, wobei der Elektromotor eine Motorelektronik umfasst, die von einer Anordnung zur Wärmeableitung getragen wird.

Derartige Elektromotoren sind allgemein bekannt und werden hauptsächlich in Großserie hergestellt. Ein Elektromotor besteht dabei aus einem drehfest mit der Motorwelle verbundenen Rotor, einem Stator mit bewickeltem Statorpaket, einem Statorgehäuse mit auf der Außenseite befindlichen Kühlrippen, beidseitigen Lagerschilden mit Wälz- oder Gleitlagern und einem auf dem der Antriebsseite gegenüberliegenden Wellenende drehfest mit der Welle verbundenen Lüfterrad, das von einer fest mit dem Statorgehäuse verbundenen Lüfterhaube umschlossen ist.

Häufig ist an dem Statorgehäuse ein Kasten angeordnet, das sogenannte Elektronikgehäuse, in dem die Bestandteile der Motorelektronik verbaut sind. In der Regel umfasst die Motorelektronik einen Frequenzumrichter und eine Leistungssteuerung und/oder eine Drehzahlregelung. Oft werden solche Elektronikgehäuse auf einem Sockel angeordnet, damit die Abwärme des Elektromotors die Motorelektronik nicht beeinflusst und der vom Motorlüfter erzeugte Kühlluftstrom auch für die Kühlung der Motorelektronik genutzt werden kann.

Dazu leitet die Lüfterhaube einerseits die radial aus dem Lüfterrad austretende Kühlluft in axiale Richtung zu den Kühlrippen des Statorgehäuses und verhindert andererseits durch ein auf der Anströmseite des Lüfterrades angeordnetes Gitter das Eindringen von Fremdkörpern.

Die US 4 963 778 beschreibt einen Elektromotor mit statischem Frequenzumrichter, der beabstandet durch einen Freiraum zum Elektromotor angeordnet ist. Durch das Drehen eines Ventilators wird ein Luftstrom erzeugt, der den Elektromotor und den Frequenzumrichter kühlt. Die Kühlung wird mithilfe eines Ventilationsgehäuses verbessert.

In der DE 103 39 585 A1 wird ein axial erzeugter Kühlluftstrom für einen Elektromotor mit Frequenzumrichter beschrieben, der anhand von Luftleitelementen zur Kühlung eines radial aufgebauten Klemmkastens abgelenkt wird. Die Luftleitelemente können variabel angeordnet werden, um das Ziel ausreichender Kühlung zu erreichen.

Die DE 10 2008 051 650 A1 offenbart eine Erfindung mit gemeinsamer Kühlung des Motors und der Motorelektronik, bei der der Luftstrom durch das Einlassgitter der Elektronikkühlung angesaugt wird, bevor das Lüfterrad den Luftstrom zur Kühlung des Motors und des Schaltkastens antreibt.

Durch die Beabstandung des Klemmkastens auf einem Sockel ist eine kompakte und raumsparende Anordnung der Motorelektronik an den Elektromotor schwer zu realisieren. Dabei muss der Ventilator für die Kühlung von Motor und Elektronik meist enorme Luftbewegungen erzeugen, die eine deutliche Geräuschentwicklung hervorrufen.

Die EP 2 110 929 B1 beschreibt einen Frequenzumrichter, der umfangseitig auf einem Elektromotor montiert ist. Zur Wärmeableitung sind Kühlrippen schräg und quer zusätzlich zu den Längsrippen mit den wärmeerzeugenden Bauteilen verbunden. Dabei ist der Frequenzumrichter über einen Anschlussrahmen zum Elektromotor beabstandet. Üngünstigerweise sind die Kühlrippen einseitig verschlossen, wodurch der Kühlluftstrom nur vermindert ausbilden lässt und gleichzeitig wenig geräuscharm entfaltet werden kann.

Die CN 105 490 462 A beschreibt ein integriertes Motorensystem mit variabler Frequenz und intelligenter Steuerung mit dem ein konstanter Druck, ein konstanter Durchfluss, eine konstante Temperatur und/oder eine proportionale Wasserversorgung erreicht werden kann.

Die EP 1 104 079 B1 offenbart einen Elektromotor mit Kühlrippen, wobei die Kühlrippen mit Bezug auf den Längsverlauf der Welle des Motors quer zu dieser Welle verlaufen, so dass sich eine natürliche, in Umfangsrichtung des Motorgehäuses im Wesentlichen von unten nach oben verlaufende Konvektionskühlluftströmung zwischen dem Klemmenkasten und dem Motorgehäuse einstellt.

Die EP 0 456 169 B1 zeigt einen frequenzumrichtergespeisten Elektromotor mit einem am Motorgehäuse angeordneten Klemmenkasten und einer wärmeleitenden Platte, wobei die wärmeleitende Platte kraftschlüssig an einer Kühlfläche des Motorgehäuses anliegt.

Die US 7 923 875 B2 beschreibt eine elektrische Maschine mit einem Stator, einem Rotor, der neben dem Stator angeordnet und in Bezug auf den Stator drehbar ist, und einem Gehäuse, das den Stator zumindest teilweise umgibt, wobei in einer Kammer eine Vielzahl von Kühlrippen angeordnet ist.

Die CN 105 545 721 A offenbart eine Wärmestrahlungsstruktur, die eine Wasserpumpe und eine elektrische Verstellvorrichtung integriert, wobei Verstellvorrichtung und Motorgehäuse Kühlrippen aufweisen.

Aufgabe der Erfindung ist es, eine Kreiselpumpe mit Elektromotor so kompakt als möglich auszubilden und gleichzeitig ausreichend Kühlleistung für den Elektromotor sowie dessen Motorelektronik bereitzustellen. Dabei sollte der Elektromotor und dessen Kühlanordnung mit einer möglichst geringen Geräuschentwicklung betrieben werden können. Der Austausch von Ersatzteilen sollte durch die Konstruktion des Elektromotors mit dessen Motorelektronik begünstigt sein. Die Vorrichtung sollte einfach und kostengünstig herstellbar sein.

Diese Aufgabe wird erfindungsgemäß durch eine Kreiselpumpe mit Elektromotor gelöst. Bevorzugte Varianten sind den Unteransprüchen, der Beschreibung und den Zeichnungen zu entnehmen.

Erfindungsgemäß weist die Anordnung zur Wärmeableitung eine Kontur auf, die korrespondierend zu einer Kontur des Motorgehäuses ausgebildet ist. Dadurch passen die zwei Teile einer vollintegrierten Kreiselpumpenanordnung perfekt zueinander und bilden eine kompakte sowie platzoptimierte Einheit, ganz ohne große Aufbauten und Beabstandungen. Gleichzeitig ermöglichen die Ausbildungen der Konturen eine optimale Wärmeableitung und eine effiziente, geräuschreduzierte Kühlung der vollintegrierten Kreiselpumpenanordnung.

Die Kontur beschreibt meist einen Umriss oder eine Silhouette eines Objektes. Sie kann für einen Betrachter eine Kurve darstellen, die das Objekt von seiner Umgebung abgrenzt. Der Umriss eines Objektes hängt von der Form des Objektes ab und skizziert eine Linie, durch die etwas begrenzt ist.

Im Sinne der Erfindung kann die Kontur der Anordnung zur Wärmeableitung und auch die Kontur des Motorgehäuses in Form eines vollflächigen, geschlossenen Körpers ausgebildet sein. Darüber hinaus können die Konturen auch von Elementen gebildet werden, die die Form der Konturen partiell sowie offen bilden und Unterbrechungen bzw. Auslassungen aufweisen können. In einer vorteilhaften Variante der Erfindung ist die Kontur der Anordnung zur Wärmableitung von den oberflächenvergrößernden Elementen nicht vollflächig gebildet und die Kontur des Motorgehäuses durch das vollflächige, zylindrische Motorgehäuse selbst ausgebildet.

Der Begriff korrespondierend bezeichnet das mit etwas übereinstimmen bzw. das etwas entsprechen. Im Sinne der Erfindung ist die Passung der Konturen der Anordnung zur Wärmeableitung und des Motorgehäuses übereinstimmend. Die Konturen entsprechen sich in der Art, dass sich die Bauteile nahtlos aneinander positionieren, um eine kompakte sowie integrierte Gesamtform zu bilden.

Gemäß der Erfindung weist die Anordnung zur Wärmeableitung oberflächenvergrößernden Elemente auf, mit der sie einstückig ausgebildet ist. In einer bevorzugten Variante der Erfindung handelt es sich um ein Aluminium-Gussteil bestehend aus einem Grundkörper, der die Motorelektronik trägt, mit angeformten Kühlrippen. Dabei sind die Kühlrippen plattenförmig ausgebildet, um die Oberfläche zur Wärmeabgabe zu vergrößern. Das Material Aluminium ist besonders vorteilhaft geeignet, um die entstehende Abwärme des Motors und der Motorelektronik schnell in die Kühlrippen zu leiten, wo ein geräuschreduzierter Kühlluftstrom die Wärme aufnimmt und von der vollintegrierten Kreiselpumpenanordnung abführt.

Idealerweise ist der Grundkörper der Anordnung zur Wärmeableitung in einer Form ausgebildet, um sich korrespondierend der Form des Motorgehäuses anzupassen. Dabei weist der Grundkörper einen erhöhten Sitz in der Mitte und zwei äußere Installationsebenen mit Vertiefungen auf. Vorteilhafterweise ermöglicht auch die Form des Grundkörpers eine kompakte Ausgestaltung der vollintegrierten Kreiselpumpenanordnung.

In einer besonders vorteilhaften Variante der Erfindung ist das Motorgehäuse zylindrisch ausgebildet. Dies entspricht der optimalen Bauraumausnutzung für einen Elektromotor und ist somit die Basis für die kompakte, platzoptimierte Ausgestaltung der vollintegrierten Kreiselpumpenanordnung.

Erfindungsgemäß weist das Motorgehäuse wärmeableitende Elemente auf, die in Form von Kühlrippen senkrecht und/oder waagrecht an das Motorgehäuse angeordnet sind. Zur optimalen Passung für die Anordnung zur Wärmeableitung ist ein oberes Segment des Motorgehäuses frei von Kühlrippen.

Die kompakte Ausgestaltung des Elektromotors mit der aufsitzenden Motorelektronik wird durch die bogenförmig oder gewölbt ausgebildete Kontur der Anordnung der Wärmeableitung erzielt. Die bogenförmige oder gewölbte Kontur entspricht vorteilhafterweise der zylindrischen Form des Motorgehäuses.

Idealerweise bildet die Anordnung zur Wärmeableitung mit den angeformten Kühlrippen und dem zylindrischen Gehäuse des Elektromotors Kühlkanäle. Dazu sind die Kontaktflächen der Kühlrippen zum Motorgehäuse korrespondierend zur Kontur des Motorgehäuses ausgebildet, so dass sie die Krümmung des Motorgehäuses aufweisen. Durch die korrespondierend ausgebildeten Konturen ergeben sich trapezförmige Querschnitte der Kühlkanale.

In einer besonders vorteilhaften Variante der Erfindung bilden die äußeren plattenartigen Kühlrippen der Anordnung zur Wärmeableitung mit denen des Motorgehäuses jeweils einen äußeren Kühlkanal, der zusätzlich die Wärmeabführleistung des Elektromotors und der Motorelektronik verbessert. Diese zwei zusätzlichen Kühlkanäle tragen zur kompakten Ausgestaltung der Kreiselpumpenanordnung bei gleichzeitig hervorragender Kühlleistung bei.

Erfindungsgemäß weist die Anordnung zur Wärmeableitung mindestens eine Aussparung zur Zentrierung auf einem Positionierelement auf einer Kühlrippe des Motorgehäuses auf. Diese Aussparung ist vorteilhafterweise korrespondierend zum Positionierelement und somit passgenau ausgebildet. Darüber hinaus sind in einer Variante der Erfindung drei Aussparrungen an unterschiedlichen Kühlrippen der Anordnung zur Wärmeableitung vorgesehen, die passgenau zu drei Positionierelementen ausgebildet sind, die auf unterschiedlichen Kühlrippen des Motorgehäuses angeordnet sind. Eine unmittelbare und schnelle Zentrierung der Anordnung zur Wärmeableitung auf dem Motorgehäuse ist hiermit auf besonders vorteilhafte Weise realisiert.

Gemäß der Erfindung sind an den äußeren Kühlrippen, die als Streben ausgebildet sind, der Anordnung zur Wärmeableitung je zwei Aussparungen zur Zentrierung angeordnet, so dass die zwei äußeren Kühlrippen in einem unmittelbaren Kontakt zum Motorgehäuse stehen. In einer äußerst vorteilhaften Variante der Erfindung stehen alle Kühlrippen der Anordnung zur Wärmeableitung durch die besondere Ausbildung der Kontur in unmittelbaren Kontakt zum Motorgehäuse, wodurch die Wärmeabfuhrleistung besonders ideal ausgeführt ist.

Idealerweise sind zwischen der Anordnung zur Wärmeableitung und dem Motorgehäuse entgegen dem Stand der Technik weder Bauteile noch Rahmen zur Beabstandung angeordnet. In dieser Erfindung sind die Anordnung zur Wärmeableitung und das Motorgehäuse erstmalig enorm kompakt und platzoptimiert ausgebildet. Die leistungsstarke und geräuscharme Kühlung verhindert wirksam eine Beeinträchtigung der elektrischen sowie elektronischen Bauteile durch übermäßige Hitze und ermöglicht die kompakte Ausführung.

Zur Verbindung der Motorelektronik mit der Statorwicklung des Elektromotors weist die Anordnung zur Wärmeableitung mindestens einen Führungskanal für Verbindungselemente, insbesondere für geeignete Kabel, auf. Vorteilhafterweise ist am Motorgehäuse ein Schacht zum formschlüssigen Anschluss an den Führungskanal der Anordnung zur Wärmeableitung zur Durchführung der Verbindungselemente ausgebildet. Diese durchdachte Kabelführung ist ein Baustein zur Realisierung der kompakten Ausbildung der Kreiselpumpenanordnung. Gleichzeitig kann die Passung von Führungskanal zu Schacht ebenfalls zur Zentrierung der Anordnung zur Wärmeableitung auf dem Motorgehäuse dienen.

Der Begriff vollintegrierte Kreiselpumpenanordnung beschreibt die grundsätzliche Idee eine Kreiselpumpe mit über einer Laterne angeschlossenem Elektromotor inklusive der daran angebrachten Motorelektronik ganzheitlich zu konstruieren, um eine besonders kompakte und platzsparende Anordnung zu realisieren. Die gleichzeitige und ganzheitliche Konstruktion führt zu einer idealen Passung aller Teile der Anordnung, die ebenso eine enorme Kühlleistung ohne Beabstandung von Motorelektronik zum Elektromotor und dabei die Geräuschentwicklung der Anordnung reduziert gestaltet. Der Ansatz vollintegriert berücksichtig weiterhin eine äußerst kurz ausgebildete Laterne zum Anschluss des Elektromotors an die Kreiselpumpe. Die Wärmebeeinträchtigung des Elektromotors durch die Kreiselpumpe wird einerseits mittels integrierten Wärmeleitbarrieren innerhalb der Laterne und andererseits durch eine konstruktive Fortführung des Kühlluftstroms nach der Anordnung zur Wärmeableitung über die Laterne hinweg berücksichtigt.

Die vollintegrierte Kreiselpumpenanordnung, die man auch als Integralpumpe bezeichnen kann, weist eine durchgehende Welle, eine motorintegrierte Laterne, eine motorintegrierte Motorelektronik und insbesondere ein unidirektionales geräuschoptimiertes Lüfterrad auf. Insbesondere die Lüfterhaube ist konstruiert für eine optimale Anströmung des Motors sowie der Anordnung zur Wärmeableitung und realisiert dabei ein niedriges Geräuschniveau.

Innerhalb der Laterne, die das Pumpengehäuse mit dem Elektromotor unmittelbar verbindet, ist mindestens eine Wärmeleitbarriere angeordnet. Eine solche Wärmeleitbarriere ist besonders vorteilhaft, um ein Pumpengehäuse, das von einem heißen Fluid durchströmt wird, vom antreibenden Elektromotor thermisch zu entkoppeln. Dies schützt insbesondere den Motor sowie die darin verbauten Teile und realisiert den Betrieb der Pumpe im gewünschten Betriebsbereich.

Vorzugsweise ist eine solche Wärmeleitbarriere als Materialaussparung ausgeführt. Den Raum einer Materialaussparung nimmt in aller Regel Luft ein, die als besonders guter Isolator bekannt ist und somit eine Barriere für die Wärmeleitung darstellt.

Dazu ist die Laterne vorzugsweise zylinderförmig und/oder trompetentrichterförmig ausgebildet. Diese räumliche Ausbildung ist besonders vorteilhaft, um eine zusätzliche Kühlung der Laterne durch den Kühlluftstrom, der vom Lüfterrad erzeugt wird, zu erzielen.

Idealerweise können an der Laterne der Kreiselpumpenanordnung ebenfalls oberflächenvergrößernde Elemente zur Wärmeableitung angeordnet sein. Die oberflächenvergrößernden Elemente sind vorzugsweise als Kühlrippen ausgebildet, um die Wärmeableitung der Laterne zu optimieren. Die Kühlrippen sind plattenförmig und/oder trapezförmig und/oder dreiecksförmig und/oder bogenförmig und/oder ringförmig ausgebildet. Aufgrund der optimierten Wärmeableitung der Laterne sind das Pumpengehäuse, das durch das Fördern heißer Fluide hohe Temperaturen aufweisen kann, und das Motorgehäuse nahezu thermisch entkoppelt.

Die Optimierung der Wärmeableitung der Laterne wird durch die vorteilhafte Konstruktion der Laterne erzielt. Der Lüfter des Elektromotors erzeugt einen Kühlluftstrom, der die Kühlrippen des Motorgehäuses und die Anordnung zur Wärmeableitung der Motorelektronik kühlt und anschließend über die Laterne strömt. Dabei ist die Laterne so konstruiert, dass über die Länge des Laternengrundkörpers der Innendurchmesser konstant bleibt und sich der Außendurchmesser erweitert. Auf diese besonders vorteilhafte Weise überströmt der Kühlluftstrom die Kühlrippen der Laterne und leitet die Wärme effizient ab. Gleichzeitig leitet die Konstruktion der Laterne den Kühlluftstrom über das Pumpengehäuse hinweg, so dass das Anströmen des Pumpengehäuses einen reduzierten Strömungswiderstand darstellt.

Ein weiterer Aspekt der vollintegrierten Kreiselpumpenanordnung ist die Ausgestaltung der Lüfterhaube. Idealerweise sind schaufelartige Führungselemente in der Lüfterhaube angeordnet. Diese Führungselemente weisen eine radiale Eintrittskante und eine axiale Austrittskante auf. Sie sind stationär in der Haube des Lüfters angeordnet. Ihre Aufgabe ist, eine möglichst verlustarme Umlenkung der aus dem Lüfterrad austretenden Drallströmung in eine möglichst drallfreie Strömung zur Kühlung des Elektromotors und der Motorelektronik zu realisieren. Vorteilhafterweise ist die Kühlung auf diese Weise auch bei niedriger Drehzahl des Elektromotors sehr wirksam, da die Luftströmung gerichtet an den Ort der Wärmeabfuhr, insbesondere der Kühlkanäle, erfolgt. Die schaufelartigen Führungselemente sind vergleichbar den Leitschaufeln von Leiträdern gestaltet, die vornehmlich in mehrstufigen Pumpen den Kreiselradlaufrädern nachgeschaltet sind. Sie umgeben das Lüfterrad in einem radialen Raum um das Lüfterrad.

Für eine effiziente Kühlung mit voller Kühlleistung ist eine gerichtete Kühlluftströmung enorm wichtig. Idealerweise bildet die Lüfterhaube zwischen der Wandinnenfläche des zylindrischen Teils der Lüfterhaube und einer Wandaußenfläche des Motorgehäuses einen ringförmigen Kanal aus. Zunächst wird die vom Lüfterrad angesaugte und erzeugte Kühlluftströmung von den Führungselementen der Lüfterhaube sowie der Form der Haube selbst von einer radialen in eine axiale Richtung umgelenkt. Durch die Gestaltung der schaufelartigen Führungselemente erfolgt die Umlenkung ohne Verwirbelungen, Strömungsablösungen und ohne beeinträchtigende Schallemission.

Idealerweise weist das Lüfterrad in Drehrichtung rückwärts gekrümmte Schaufeln auf. Die Tragscheibe des Lüfterrades weist einen zur Ansaugseite der Kühlluftströmung ausgebildeten Nabenvorsprung auf, an dem die Schaufeln aus der Mitte versetzt angreifen. Die Schaufeln stehen von der Tragscheibe in saugseitiger Richtung hervor und weisen vorzugsweise einen entgegen der Drehrichtung gekrümmten Verlauf auf.

Die strömungsoptimierte Erzeugung des Kühlluftstroms mit dem Lüfterrad wird insbesondere durch die Schaufelanordnung erzielt. Dabei sind die Schaufeln des Lüfterrades radial gekrümmt entgegen der Drehrichtung. Sie setzen dabei vorzugsweise auf einer Trompetentrichterform außerhalb des Mittelpunkts und somit mit einer aus der Mitte versetzten Anordnung auf der Tragscheibe an.

Bisher ist noch keine Kreiselpumpenanordnung bekannt, die alle Merkmale dieser ganzheitlichen Integration aller erforderlichen Einzelteile auf diese vorteilhafte Weise kombiniert.

Weitere Merkmale und Vorteile der Erfindung ergeben sich aus der Beschreibung von Ausführungsbeispielen anhand der Zeichnungen und aus den Zeichnungen selbst.

Dabei zeigt:
- Fig. 1: einen Schnitt eines Elektromotors mit einer über eine integrierte Laterne verbundenen Kreiselpumpe,
- Fig. 2: perspektivische Ansicht der Integralpumpe mit Elektromotor und Lüfterrad,
- Fig. 3: eine perspektivische Ansicht der Anordnung zur Wärmeableitung auf dem Elektromotor,
- Fig. 4: eine Sprengansicht der Anordnung zur Wärmeableitung und des Elektromotors,
- Fig. 5: eine perspektivische Ansicht der Lüfterhaube und des Lüfterrades.

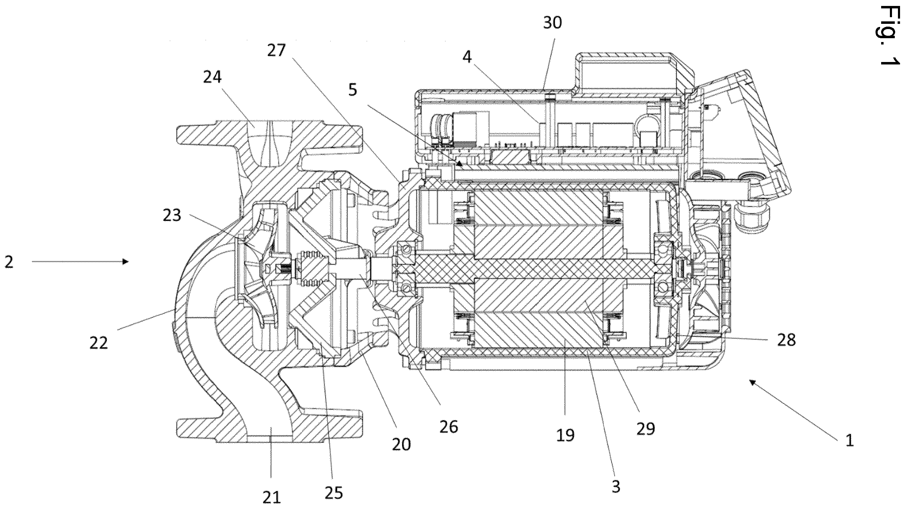

In Fig. 1 ist ein Schnitt eines Elektromotors 1 mit einer über eine integrierte Laterne 20 verbundenen Kreiselpumpe 2 dargestellt. Durch einen Saugmund 21 tritt das Fluid in das Pumpengehäuse 22 der Kreiselpumpe 2 ein. Innerhalb des Pumpengehäuses 22 ist das Laufrad 23 angeordnet. Das Laufrad 23 überträgt kinetische Energie auf das Fluid, das über den Druckstutzen 24 die Kreiselpumpe 2 verlässt. Der mit Fluid und dem Laufrad 23 gefüllte Raum wird von einem Pumpengehäuse 22 und einem Gehäusedeckel 25 begrenzt. Das Laufrad 23 ist drehfest mit einer durchgehenden Welle 26 verbunden, die durch den Elektromotor 1 angetrieben wird.

Die durchgehende Welle 26 wird von einem pumpenseitigen Lagerschild 27 und einem motorseitigen Lagerschild 28 durch die integrierten Wälzlager gestützt und drehbar gelagert. Die durchgehende Welle 26 weist einen Rotor 29 auf. Entsprechend des elektromotorischen Prinzips treibt das umlaufende Magnetfeld der Statorwicklung 19 den Rotor 29 an.

Der Grundkörper 7 der Anordnung zur Wärmeableitung 5 sitzt auf dem Motorgehäuse 3 auf und trägt die Motorelektronik 4. Der Elektronikgehäusedeckel 30 verschließt die Motorelektronik 4, die in dieser Variante der Erfindung aus einem Frequenzumrichter, einer Leistungssteuerung und/oder Drehzahlregelung besteht. Die Fig. 1 zeigt eine vollintegrierte Kreiselpumpenanordnung, die äußerst kompakt und platzoptimiert aufgebaut ist. Die ganzheitliche Integration der Anordnung zur Wärmeableitung 5, der Laterne 20 und der Motorelektronik 4 führt zu einer platzsparenden Anordnung, die gleichzeitig über eine enorm leistungsfähige sowie geräuschreduzierte Kühlung verfügt.

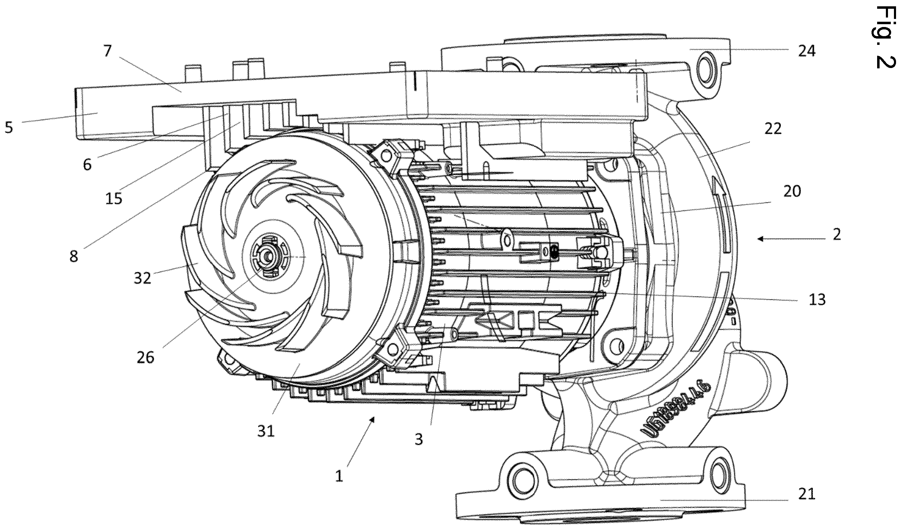

Fig. 2 zeigt eine perspektivische Ansicht der Kreiselpumpe 2 mit Elektromotor 1 und Lüfterrad 31. Die Kreiselpumpe 2 ist in dieser Perspektive teilweise durch den Elektromotor 1 verdeckt, wobei der Saugmund 21 darunter, der Druckstutzen 24 darüber und das Pumpengehäuse 22 seitlich erkennbar sind. Das Motorgehäuse 3 des Elektromotors 1 weist wärmeableitende Elemente 13 auf, die teils senkrecht und teils waagrecht am Motorgehäuse 3 angeordnet sind. Auf dem Motorgehäuse 3 sitzt die Anordnung zur Wärmeableitung 5 auf, die aus einem Grundkörper 7 mit angeformten, oberflächenvergrößernden Elementen 6 gebildet ist. Die oberflächenvergrößernden Elemente 6 und die wärmeableitenden Elemente 13 sind in diesem Ausführungsbeispiel als plattenförmige Kühlrippen ausgebildet. Die aufsitzende Anordnung zur Wärmeableitung 5 mit den plattenförmigen Kühlrippen bildet mit dem Motorgehäuse 3 Kühlkanäle 15, die einen trapezförmigen Querschnitt aufweisen. Dabei korrespondieren die Kontaktflächen 8 der Kühlrippen mit der Krümmung des Motorgehäuses 3, so dass die Anordnung zur Wärmeableitung 5 kompakt und spaltfrei auf dem Motorgehäuse 3 aufsitzt.

Auf der pumpenabgewandten Seite des Elektromotors 1 ist das Lüfterrad 31 auf der durchgehenden Welle 26 angeordnet. Das Lüfterrad 31 weist in Drehrichtung rückwärts gekrümmte Schaufeln 32 auf, die einen besonders leistungsstarken und gleichzeitig geräuscharmen Kühlluftstrom erzeugen.

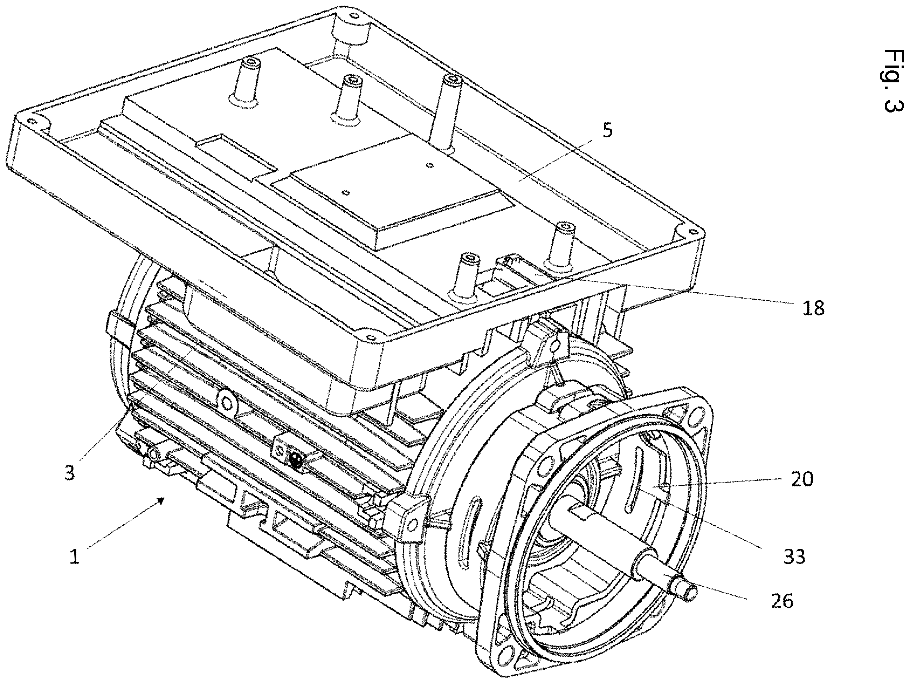

Fig. 3 zeigt eine perspektivische Ansicht der Anordnung zur Wärmeableitung 5, die auf dem Motorgehäuse 3 des Elektromotors 1 angeordnet ist. Die Anordnung zur Wärmeableitung 5 weist einen Führungskanal 18 zur Durchführung von Verbindungselementen in Form von Kommunikationsleitungen bzw. Kabel auf. Das Motorgehäuse 3 geht nahtlos in die Laterne 20 über, die die durchgehende Welle 26 umgibt. Die Laterne 20 weist in diesem Ausführungsbeispiel mehrere Wärmeleitbarrieren 33 auf, die in Form von Materialaussparungen ausgebildet sind. Die Laterne 20 entkoppelt die nicht dargestellte Kreiselpumpe 2 thermisch vom Elektromotor 1.

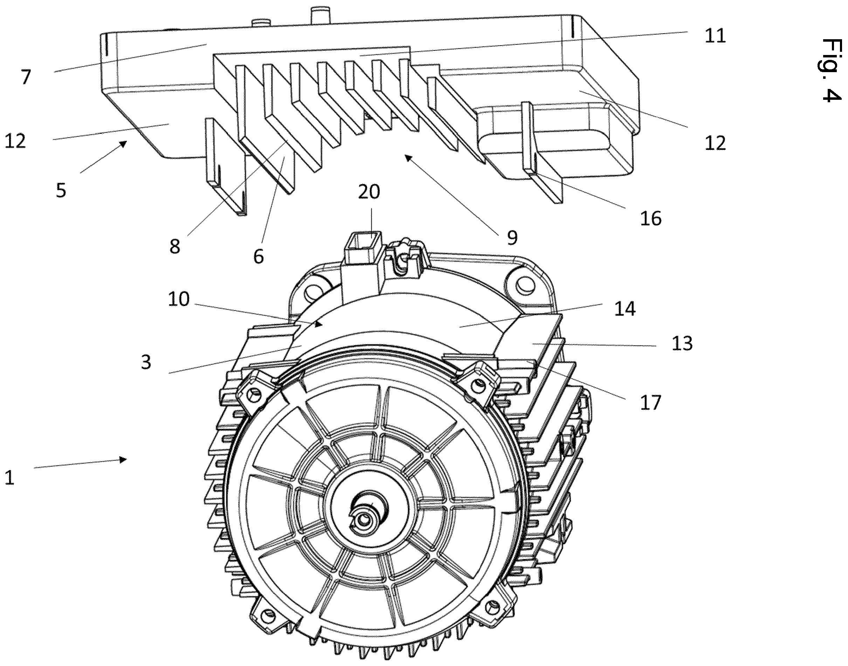

Fig. 4 zeigt eine Sprengansicht der Anordnung zur Wärmeableitung 5 und des Elektromotors 1. Das Motorgehäuse 3 des Elektromotors 1 weist eine Kontur 10 auf, die durch die in diesem Ausführungsbeispiel dargestellte zylindrische Form des Motorgehäuses 3 vorgegeben ist. An dem Motorgehäuse 3 sind wärmeableitende Elemente 13 in Form von plattenartigen Kühlrippen angeordnet, die zum Teil senkrecht und zum Teil waagrecht ausgerichtet sind. Zur korrespondierenden Aufnahme der Anordnung zur Wärmeableitung 5 ist das obere Segment 14 des Motorgehäuses 3 ohne angeordnete, wärmeableitende Elemente 13 ausgebildet. Das Motorgehäuse 3 weist zur Durchführung von Verbindungselementen zwischen Motorelektronik 4 und der Statorwicklung 19 einen Schacht 20 zum formschlüssigen Anschluss an den Führungskanal 18 auf.

Die Anordnung zur Wärmeableitung 5 weist einen Grundkörper 7 auf, der in der Mitte einen erhöhten Sitz 11 und außen zwei tieferliegenden Installationsebenen 12 umfasst. An der Unterseite des Grundkörpers 7 sind oberflächenvergrößernde Elemente 6 in Form von plattenförmigen Kühlrippen einstückig angeformt. Die Kontur 9 der Anordnung zur Wärmeableitung 5 wird durch die Krümmung der Kontaktflächen 8 der Kühlrippen korrespondierend zur Kontur 10 gebildet. Die Anordnung zur Wärmeableitung 5 kann dadurch kompakt an das Motorgehäuse 3 angefügt werden, so dass eine platzoptimierte Kreiselpumpenanordnung realisiert werden kann. Zur Zentrierung der Anordnung der Wärmeableitung 5 auf dem Motorgehäuse 3 weisen die oberflächenvergrößernden Elemente 6 erfindungsgemäß mindestens eine Aussparung 16 auf, die korrespondierend zu den Positionierelementen 17 ausgebildet sind. Dazu weisen erfindungsgemäß die wärmeableitenden Elemente 13 des Motorgehäuses 3 in gleicher Anzahl Positionierelemente 17 auf, wie Aussparungen 16 an den oberflächenvergrößernden Elementen 6 realisiert sind.

In dieser Ausführungsvariante weisen die oberflächenvergrößernden Elemente vier Aussparungen 16 auf, wodurch die beiden äußersten Kühlrippen in direktem Kontakt zum Motorgehäuse 3 stehen. Aufgrund der vorteilhaften Kontur 9 der Anordnung zur Wärmeableitung 5, insbesondere der oberflächenvergrößernden Elemente 6, stehen in der dargestellten Ausführungsvariante alle Kühlrippen in unmittelbaren Kontakt zum Motorgehäuse 3. Zwischen der Anordnung zur Wärmeableitung 5 und dem Motorgehäuse 3 sind weder weitere Bauteile noch Rahmen zur Beabstandung angeordnet, wodurch die Kreiselpumpe 2 mit dem Elektromotor 1 äußerst kompakt und platzoptimiert ausgeführt werden können.

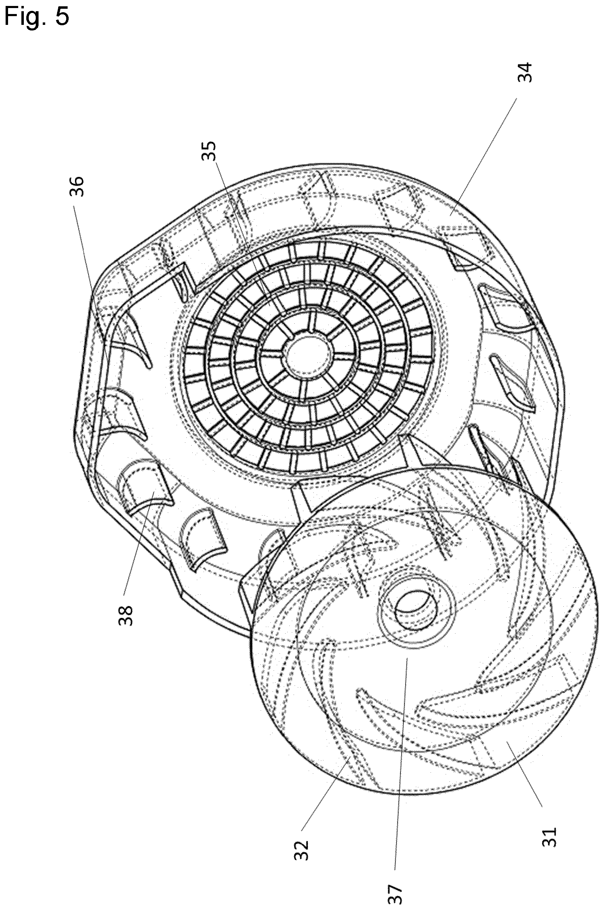

Die Fig. 5 zeigt eine perspektivische Ansicht der Lüfterhaube 34 und des Lüfterrades 31. Die Lüfterhaube 34 weist Öffnungen des Ansauggitters 35 auf, die in diesem Ausführungsbeispiel in Form eines Gitters innerhalb der Lüfterhaube 34 ausgebildet sind.

Darüber hinaus weist die Lüfterhaube 34 eine asymmetrische Anformung 36 auf, die einen ausreichend großen Kühlluftstrom in den Kühlkanäle 15 leitet. Dieser Kühlluftstrom wird durch das Lüfterrad 31 erzeugt, das in Drehrichtung rückwärts gekrümmte Schaufeln 32 aufweist, die auf der trichterförmigen Tragscheibe 37 angeordnet sind. In der Lüfterhaube 34 sind Führungselemente 38 angeordnet, die einstückig mit der Lüfterhaube 34 ausgebildet sind. Die Führungselemente 38 weisen eine radiale Krümmung entgegen der Krümmung des Lüfterrades 31 und eine radiale Eintrittskante auf. Durch die Gestaltung der schaufelartigen Führungselemente 38 erfolgt die Umlenkung des Kühlluftstroms ohne Verwirbelungen, Strömungsablösungen und ohne beeinträchtigende Schallemission. Die vollintegrierte Kreiselpumpenanordnung lässt sich hiermit besonders effizient, geräuscharm und leistungsstark kühlen.

## Patentansprüche

1. Kreiselpumpe (2) mit einem Elektromotor (1), der ein Motorgehäuse (3) und einen Grundkörper (7) aufweist, wobei der Elektromotor (1) eine Motorelektronik (4) umfasst, die von einer Anordnung zur Wärmeableitung (5) getragen wird, wobei die Anordnung zur Wärmeableitung (5) eine Kontur (9) aufweist, die korrespondierend zu einer Kontur (10) des Motorgehäuses (3) ausgebildet ist, zum mindestens partiellen, unmittelbaren Kontakt beider Konturen (9, 10), wobei die Anordnung zur Wärmeableitung (5) oberflächenvergrößernde Elemente (6) aufweist, **dadurch gekennzeichnet, dass** das Motorgehäuse (3) senkrecht und/oder waagrecht angeordnete wärmeableitende Elemente (13) in Form von Kühlrippen aufweist, wobei in einem oberen Segment (14) des Motorgehäuses die wärmeableitenden Elemente (13) ausgespart sind, wobei die Anordnung zur Wärmeableitung (5) mindestens eine Aussparung (16) zur Zentrierung auf einem Positionierelement (17) auf einer Kühlrippe (13) des Motorgehäuses (3) aufweist, wobei zur Zentrierung der Anordnung zur Wärmeableitung (5) des Motorgehäuses (3) die oberflächenvergrößernden Elemente (6) die mindestens eine Aussparung (16) aufweisen, die korrespondierend zu dem Positionierelement (17) ausgebildet ist, wobei die wärmeableitenden Elemente (13) des Motorgehäuses (3) in gleicher Anzahl Positionierelemente (17) aufweisen, wie Aussparungen (16) an den oberflächenvergrößernden Elementen (6) realisiert sind.

2. Kreiselpumpe nach Anspruch 1, **dadurch gekennzeichnet, dass** die oberflächenvergrößernden Elemente (6) und die Anordnung zur Wärmeableitung (5) einstückig ausgebildet sind.

3. Kreiselpumpe nach Anspruch 1 oder 2, **dadurch gekennzeichnet, dass** der Grundkörper (7) einen erhöhten Sitz (11) in der Mitte und zwei äußere Installationsebenen (12) mit Vertiefungen aufweist.

4. Kreiselpumpe nach einem der Ansprüche 1 bis 3, **dadurch gekennzeichnet, dass** das Motorgehäuse (3) zylindrisch ausgebildet ist.

5. Kreiselpumpe nach einem der Ansprüche 1 bis 4, **dadurch gekennzeichnet, dass** die Kontur (9) der Anordnung der Wärmeableitung (5) bogenförmig oder gewölbt ausgebildet ist.

6. Kreiselpumpe nach einem der Ansprüche 1 bis 5, **dadurch gekennzeichnet, dass** die Anordnung zur Wärmeableitung (5) mit den oberflächenvergrößernden Elementen (6) und der Kontur (14) des Motorgehäuses (3) Kühlkanäle (15) bildet.

7. Kreiselpumpe nach Anspruch 6, **dadurch gekennzeichnet, dass** die Kühlkanäle (15) einen trapezförmigen Querschnitt aufweisen.

8. Kreiselpumpe nach einem der Ansprüche 1 bis 7, **dadurch gekennzeichnet, dass** die Kontaktfläche (8) der oberflächenvergrößernden Elemente (6) die Krümmung der Kontur (14) des Motorgehäuses (3) aufweisen.

9. Kreiselpumpe nach einem der Ansprüche 1 bis 8, **dadurch gekennzeichnet, dass** die Anordnung zur Wärmeableitung (5) einen oder mehrere Führungskanäle (18) für Elemente aufweist, die eine Verbindung zwischen der Motorelektronik (4) und der Statorwicklung (19) herstellen.

10. Kreiselpumpe nach einem der Ansprüche 1 bis 9, **dadurch gekennzeichnet, dass** das Motorgehäuse (3) mindestens einen Schacht (20) zum formschlüssigen Anschluss an die Führungskanäle (18) aufweist.

11. Kreiselpumpe nach einem der Ansprüche 1 bis 10, **dadurch gekennzeichnet, dass** der Elektromotor (1) ein Lüfterrad (31) aufweist, wobei das Lüfterrad (31) unidirektional ausgebildet ist und/oder vorzugsweise in Drehrichtung rückwärts gekrümmte Schaufeln (32) aufweist.

12. Kreiselpumpe nach Anspruch 11, **dadurch gekennzeichnet, dass** das Lüfterrad (31) mit einer Lüfterhaube (34) versehen ist, wobei die Lüfterhaube (34) Führungselemente (38) aufweist, die als Leitelemente zur Führung eines Kühlluftstroms ausgebildet sind.

13. Kreiselpumpe nach Anspruch 11 oder 12, **dadurch gekennzeichnet, dass** das Lüfterrad (31) eine Trompetentrichterform aufweist.

14. Kreiselpumpe nach einem der Ansprüche 1 bis 13, **dadurch gekennzeichnet, dass** der Elektromotor (1) über eine Laterne (20) mit der Kreiselpumpe (2) unmittelbar verbunden ist, wobei innerhalb der Laterne (20) mindestens eine Wärmeleitbarriere (33) angeordnet ist.

15. Kreiselpumpe nach Anspruch 14, **dadurch gekennzeichnet, dass** die Laterne (20) oberflächenvergrößernde Elemente aufweist.

16. Kreiselpumpe nach einem der Ansprüche 1 bis 15, **dadurch gekennzeichnet, dass** die Kreiselpumpe (2) und der Elektromotor (1) eine gemeinsame, durchgehende Welle (26) aufweisen.

## Claims

1. Centrifugal pump (2) having an electric motor (1) which has a motor casing (3) and a base body (7), wherein the electric motor (1) comprises motor electronics (4) which are carried by an arrangement for heat dissipation (5), wherein the arrangement for heat dissipation (5) has a contour (9) which corresponds to a contour (10) of the motor casing (3), for the at least partial, direct contact of the two contours (9, 10), wherein the arrangement for heat dissipation (5) has surface-area-increasing elements (6), **characterized in that** the motor casing (3) has vertically and/or horizontally arranged heat-dissipating elements (13) in the form of cooling fins, wherein the heat-dissipating elements (13) are omitted in an upper segment (14) of the motor casing, wherein the arrangement for heat dissipation (5) has at least one cutout (16) for centring on a positioning element (17) on a cooling fin (13) of the motor casing (3), wherein, for centring the arrangement for heat dissipation (5) of the motor casing (3), the surface-area-increasing elements (6) have the at least one cutout (16), which corresponds to the positioning element (17), wherein the heat-dissipating elements (13) of the motor casing (3) have the same number of positioning elements (17) as there are cutouts (16) in the surface-area-increasing elements (6).

2. Centrifugal pump according to Claim 1, **characterized in that** the surface-area-increasing elements (6) and the arrangement for heat dissipation (5) are formed in one piece.

3. Centrifugal pump according to Claim 1 or 2, **characterized in that** the base body (7) has a raised seat (11) in the middle and two outer installation surfaces (12) with depressions.

4. Centrifugal pump according to one of Claims 1 to 3, **characterized in that** the motor casing (3) is cylindrical.

5. Centrifugal pump according to one of Claims 1 to 4, **characterized in that** the contour (9) of the arrangement for heat dissipation (5) is arcuate or curved.

6. Centrifugal pump according to one of Claims 1 to 5, **characterized in that** the arrangement for heat dissipation (5) forms cooling channels (15) with the surface-area-increasing elements (6) and the contour (14) of the motor casing (3).

7. Centrifugal pump according to Claim 6, **characterized in that** the cooling channels (15) have a trapeziform cross section.

8. Centrifugal pump according to one of Claims 1 to 7, **characterized in that** the contact surface (8) of the surface-area-increasing elements (6) have the curvature of the contour (14) of the motor casing (3).

9. Centrifugal pump according to one of Claims 1 to 8, **characterized in that** the arrangement for heat dissipation (5) has one or more guide channels (18) for elements which establish a connection between the motor electronics (4) and the stator winding (19).

10. Centrifugal pump according to one of Claims 1 to 9, **characterized in that** the motor casing (3) has at least one duct (20) for interlocking connection to the guide channels (18).

11. Centrifugal pump according to one of Claims 1 to 10, **characterized in that** the electric motor (1) has a fan wheel (31), wherein the fan wheel (31) is unidirectional and/or has blades (32) which are preferably curved backwards in the rotational direction.

12. Centrifugal pump according to Claim 11, **characterized in that** the fan wheel (31) is provided with a fan cowl (34), wherein the fan cowl (34) has guide elements (38) which are in the form of directing elements for guiding a cooling air stream.

13. Centrifugal pump according to Claim 11 or 12, **characterized in that** the fan wheel (31) is trumpet-bell-shaped.

14. Centrifugal pump according to one of Claims 1 to 13, **characterized in that** the electric motor (1) is connected directly to the centrifugal pump (2) by way of a lantern (20), wherein at least one heat conduction barrier (33) is arranged inside the lantern (20).

15. Centrifugal pump according to Claim 14, **characterized in that** the lantern (20) has surface-area-increasing elements.

16. Centrifugal pump according to one of Claims 1 to 15, **characterized in that** the centrifugal pump (2) and the electric motor (1) have a common, continuous shaft (26).

## Revendications

1. Pompe centrifuge (2) comportant un moteur électrique (1), qui présente un carter (3) de moteur et un corps de base (7), le moteur électrique (1) comportant une électronique (4) de moteur qui est portée par un agencement pour la dissipation de chaleur (5), l'agencement pour la dissipation de chaleur (5) présentant un contour (9) qui est réalisé de manière correspondante à un contour (10) du carter (3) de moteur pour un contact au moins partiel, direct des deux contours (9, 10), l'agencement pour la dissipation de chaleur (5) présentant des éléments (6) agrandissant la surface, **caractérisée en ce que** le carter (3) de moteur présente des éléments (13) dissipateurs de chaleur agencés verticalement et/ou horizontalement sous forme d'ailettes de refroidissement, les éléments (13) dissipateurs de chaleur étant évidés dans un segment supérieur (14) du carter de moteur, l'agencement pour la dissipation de chaleur (5) présentant au moins un évidement (16) pour le centrage sur un élément de positionnement (17) sur une ailette de refroidissement (13) du carter (3) de moteur, les éléments (6) agrandissant la surface présentant, pour le centrage de l'agencement pour la dissipation de chaleur (5) du carter (3) du moteur, ledit au moins un évidement (16) qui est réalisé de manière correspondante à l'élément de positionnement (17), les éléments (13) dissipateurs de chaleur du carter (3) de moteur présentant le même nombre d'éléments de positionnement (17) que le nombre d'évidements (16) réalisés au niveau des éléments (6) agrandissant la surface.

2. Pompe centrifuge selon la revendication 1, **caractérisée en ce que** les éléments (6) agrandissant la surface et l'agencement pour la dissipation de chaleur (5) sont réalisés d'une seule pièce.

3. Pompe centrifuge selon la revendication 1 ou 2, **caractérisée en ce que** le corps de base (7) présente un siège (11) plus élevé dans le centre et deux plans d'installation (12) externes présentant des creux.

4. Pompe centrifuge selon l'une des revendications 1 à 3, **caractérisée en ce que** le carter (3) de moteur est réalisé de manière cylindrique.

5. Pompe centrifuge selon l'une des revendications 1 à 4, **caractérisée en ce que** le contour (9) de l'agencement pour la dissipation de chaleur (5) est réalisé en forme d'arc ou sous forme courbée.

6. Pompe centrifuge selon l'une des revendications 1 à 5, **caractérisée en ce que** l'agencement pour la dissipation de chaleur (5) forme des canaux de refroidissement (15) à l'aide des éléments (6) agrandissant la surface et du contour (14) du carter (3) de moteur.

7. Pompe centrifuge selon la revendication 6, **caractérisée en ce que** les canaux de refroidissement (15) présentent une section transversale trapézoïdale.

8. Pompe centrifuge selon l'une des revendications 1 à 7, **caractérisée en ce que** la surface de contact (8) des éléments (6) agrandissant la surface présentent la courbure du contour (14) du carter (3) de moteur.

9. Pompe centrifuge selon l'une des revendications 1 à 8, **caractérisée en ce que** l'agencement pour la dissipation de chaleur (5) présente un ou plusieurs canaux de guidage (18) pour des éléments qui établissent une liaison entre l'électronique (4) de moteur et l'enroulement (19) de stator.

10. Pompe centrifuge selon l'une des revendications 1 à 9, **caractérisée en ce que** le carter (3) de moteur présente au moins un conduit (20) pour le raccordement par complémentarité de forme aux canaux de guidage (18).

11. Pompe centrifuge selon l'une des revendications 1 à 10, **caractérisée en ce que** le moteur électrique (1) présente un ventilateur (31), le ventilateur (31) étant réalisé de manière unidirectionnelle et/ou, de préférence, présentant des aubes (32) courbées vers l'arrière dans le sens de rotation.

12. Pompe centrifuge selon la revendication 11, **caractérisée en ce que** le ventilateur (31) est pourvu d'un capot (34) de ventilateur, le capot (34) de ventilateur présentant des éléments de guidage (38) qui sont réalisés comme éléments conducteurs pour le guidage d'un flux d'air de refroidissement.

13. Pompe centrifuge selon la revendication 11 ou 12, **caractérisée en ce que** le ventilateur (31) présente une forme d'entonnoir en trompette.

14. Pompe centrifuge selon l'une des revendications 1 à 13, **caractérisée en ce que** le moteur électrique (1) est relié directement par l'intermédiaire d'une lanterne (20) à la pompe centrifuge (2), au moins une barrière de conduction de chaleur (33) étant agencée à l'intérieur de la lanterne (20).

15. Pompe centrifuge selon la revendication 14, **caractérisée en ce que** la lanterne (20) présente des éléments agrandissant la surface.

16. Pompe centrifuge selon l'une des revendications 1 à 15, **caractérisée en ce que** la pompe centrifuge (2) et le moteur électrique (1) présentent un arbre (26) commun et continu.
